Europäisches Patentamt

**European Patent Office**

Office européen des brevets

(11) Veröffentlichungsnummer: **0 207 880**
**B1**

(12) **EUROPÄISCHE PATENTSCHRIFT**

(45) Veröffentlichungstag der Patentschrift:
**20.09.89**

㉑ Anmeldenummer 86730092.3

(22) Anmeldetag: **06.06.86**

(51) Int. Cl.⁴: **H02H 3/093**

(54) Verfahren zum Erzeugen eines Auslösesignals in Abhängigkeit von der Grösse und der Dauer eines Überstromes.

(30) Priorität: **21.06.85 DE 3522738**

(43) Veröffentlichungstag der Anmeldung:
**07.01.87 Patentblatt 87/2**

(45) Bekanntmachung des Hinweises auf die Patenterteilung:
**20.09.89 Patentblatt 89/38**

㊽ Benannte Vertragsstaaten
**DE FR GB IT**

(56) Entgegenhaltungen:
**GB-A- 2 037 104**
**GB-A- 2 047 995**

(73) Patentinhaber: **Siemens Aktiengesellschaft,
Wittelsbacherplatz 2, D-8000 München 2(DE)**

(72) Erfinder: **Förnsel, Helmut, Ing. grad., Zietenstrasse 12,
D-7500 Karlsruhe 21(DE)**
Erfinder: **Simmel, Hans-Eberhard, Dipl.-Ing.,
Piemontstrasse 6, D-7500 Karlsruhe 31(DE)**

ACTORUM AG

## Beschreibung

Die Erfindung bezieht sich auf ein Verfahren zum Erzeugen eines Auslösesignals in Abhängigkeit von der Größe und der Dauer eines Überstromes, bei dem eine aus dem Überstrom abgeleitete, gleichgerichtete Meßgröße abgetastet wird und die abgetasteten Meßwerte in entsprechende digitale Werte umgeformt werden, die digitalen Werte einer vorgegebenen Funktion entsprechend gewichtet und aufsummiert werden und bei einem oberhalb eines vorgegebenen Vergleichswertes liegenden Summenwert das Auslösesignal gebildet wird und die Aufsummierung vor Bildung des Auslösesignals rückgängig gemacht wird, wenn der Überstrom für eine Zeit eine vorgegebene Schwelle unterschreitet.

Nach einem derartigen Verfahren arbeitet ein bekanntes Überwachungsgerät, das in der DE-OS 29 50 031 beschrieben ist. Bei diesem bekannten Überwachungsgerät wird nämlich eine durch Gleichrichtung aus dem zu überwachenden Strom gewonnene Meßgröße mittels einer Abtastschaltung abgetastet und die so gewonnenen Abtastwerte in einem A/D-Wandler in entsprechende digitale Werte umgeformt. Die digitalen Werte werden in einem Funktionsgenerator gewichtet und nach Wichtung in einer Summationsschaltung aufaddiert. Erreicht der Stand der Summationsschaltung einen vorgegebenen Vergleichswert, dann wird ein Auslösesignal erzeugt. Bei dem bekannten Überwachungsgerät ist an den A/D-Wandler eine Schaltungsbaugruppe angeschlossen, mit der ständig überprüft wird, ob der zu überwachende Strom Überstromwerte aufweist. Solange dies der Fall ist, wird ein der Schaltungsbaugruppe nachgeordneter, taktgesteuerter Zähler ständig zurückgestellt. Bleibt das Rückstellsignal der Schaltungsbaugruppe aus, dann läuft der taktgesteuerte Zähler auf einen vorgegebenen Zählerstand auf und stellt dann die Summationsschaltung zurück. Damit dies nicht bereits jeweils dann geschieht, wenn aufgrund des Kurvenverlaufs der gleichgerichteten Meßgröße deren Momentanwerte unter einem einen Überstromwert kennzeichnenden Wert fallen, muß der vorgegebene Zählerstand bei dem bekannten Überwachungsgerät so bemessen sein, daß dieser Zählerstand erst nach einer Zeit erreichbar ist, die etwa der Dauer einer Halbschwingung des zu überwachenden Stromes entspricht oder länger als diese Dauer ist. Dies kann dazu führen, daß im Einzelfalle noch eine Auslösung erfolgt, ohne daß dies erforderlich ist. In jedem Falle erfordert das nach dem geschildertem Verfahren arbeitende bekannte Überwachungsgerät für zu überwachende Ströme von 50 Hz oder 60 Hz unterschiedlich hinsichtlich des kritischen Zählerstandes eingestellte Zähler.

Der Erfindung liegt die Aufgabe zugrunde, ein Verfahren zum Erzeugen eines Auslösesignals in Abhängigkeit von der Größe und der Dauer eines Überstromes anzugeben, bei dem der Zeitpunkt der Rückgängigmachung der Aufsummierung bei schwindendem Überstrom unmittelbar von dem Kurvenverlauf der Meßgröße abhängt und somit unabhängig von der Frequenz des jeweils auf Überstromwerte zu überwachenden Stromes etwa nach einer Halbschwingung des zu überwachenden Stromes erfolgt.

Zur Lösung dieser Aufgabe werden bei einem Verfahren der eingangs angegebenen Art erfindungsgemäß die digitalen Werte des jeweils letzten, mindestens einer Halbperiode des Überstromes entsprechenden Zeitraums gespeichert, und es wird ein Vergleich aller jeweils gleichzeitig gespeicherten digitalen Werte vorgenommen; auf einen bei dem Vergleich ermittelten höchsten gespeicherten Wert mit einer unterhalb der vorgegebenen Schwelle liegenden Größe wird die Aufsummierung rückgängig gemacht.

Ein wesentlicher Vorteil des erfindungsgemäßen Verfahrens besteht darin, daß ein nach diesem Verfahren arbeitendes Gerät unabhängig von der Frequenz eines auf Überstromwerte zu überwachenden Stromes ausgeführt werden kann, weil ein Abbruch der Aufsummierung bzw. ein Löschen der aufsummierten Werte bei sinkendem Überstrom nicht mittels eines bis zu einem vorgegebenen Zählerstand laufenden Zählers bewirkt ist, sondern dann erfolgt, wenn nach gespeicherten Überstromwerten erstmals aufgrund des Vergleichs als höchster gespeicherter Wert ein Wert ermittelt wird, der unterhalb einer vorgegebenen Schwelle liegt und keinen Überstromwert darstellt. In der Regel wird dies der Fall sein bei dem Scheitelwert der ersten Halbwelle, der unterhalb der vorgegebenen Schwelle liegt. Ein Löschen der Aufsummierung erfolgt also stets in Abhängigkeit von dem tatsächlichen Verlauf der Meßgröße.

Bei dem erfindungsgemäßen Verfahren kann der Vergleich der jeweils gleichzeitig gespeicherten digitalen Werte mit unterschiedlicher Rate erfolgen. Wird ein besonders genau arbeitendes Verfahren angestrebt, dann ist es vorteilhaft, mit jedem neu gespeicherten digitalen Wert einen Vergleich aller jeweils gleichzeitig gespeicherten digitalen Werte untereinander vorzunehmen. Auf diese Weise läßt sich sofort dann, wenn sich unter den gleichzeitig gespeicherten digitalen Werten kein Wert mehr findet, der oberhalb der vorgegebenen Schwelle liegt, die Aufsummierung rückgängig machen, so daß dann nicht fälschlicherweise noch ein Auslösesignal erzeugt wird.

Werden mit jedem neu gespeicherten digitalen Wert alle jeweils gleichzeitig gespeicherten digitalen Werte untereinander verglichen, dann erfordert dies bei der praktischen Durchführung einen relativ hohen Aufwand; dies bedeutet, daß bei der praktischen Durchführung des erfindungsgemäßen Verfahrens mit in der Regel einem Mikrocomputer dieser Mikrocomputer verhältnismäßig leistungsfähig sein muß.

Diesbezüglich anspruchsloser läßt sich das erfindungsgemäße Verfahren dann durchführen, wenn bei ihm gemäß einer anderen Ausgestaltung ein Vergleich aller jeweils gleichzeitig gespeicherten digitalen Werte untereinander mit einer Rate erfolgt, die kleiner als die Abtastrate ist, mit der die gleichgerichtete Meßgröße abgetastet wird. Es kann in diesem Falle zur Durchführung des Verfahrens ein weniger leistungsfähiger Mikrocomputer verwendet werden. In Kauf genommen werden muß dabei aber, daß womöglich noch weitere abgetastete Meßwerte gewichtet und aufsummiert werden, so daß im Grenzfall die Aufsummierung im Grunde genommen zu spät rückgängig gemacht wird.

Zur Erläuterung der Erfindung ist in

Figur 1 u. a. ein Diagramm mit einer aus dem zu überwachenden Strom gewonnenen, gleichgerichteten Meßgröße, in

Figur 2 eine Schaltungsanordnung in Blockschaltdarstellung und in

Figur 3 eine weitere Schaltungsanordnung in Blockschaltdarstellung wiedergegeben.

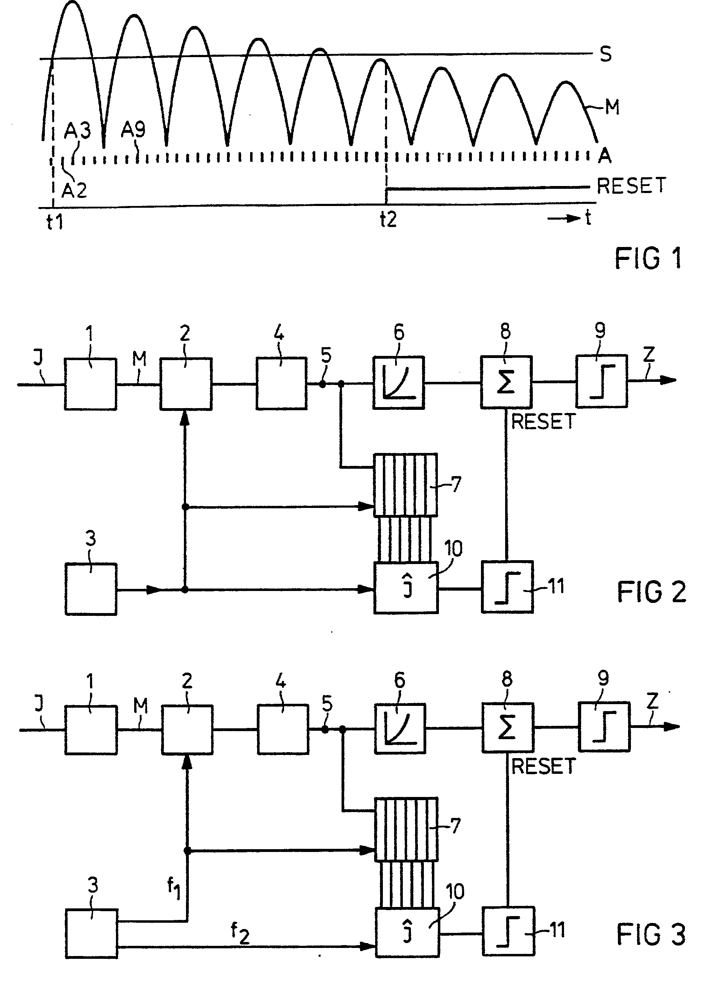

Wie der Figur 2 entnehmbar ist, wird bei Durchführung des erfindungsgemäßen Verfahrens ein in seiner Größe auf das Auftreten eines Überstromes zu überwachender Strom J einer Gleichrichteranordnung 1 zugeführt, bei dem es sich um einen Zweiweggleichrichter handeln kann. Ist der Strom J ein einphasiger Strom, dann entsteht am Ausgang der Gleichrichteranordnung 1 eine Meßgröße M, die in ihrem zeitlichen Verlauf in Figur 1 wiedergegeben ist. Dabei ist in Figur 1 unterstellt, daß sich die Meßgröße M von anfänglichen, einen Überstrom kennzeichnenden und damit oberhalb einer Schwelle S liegenden Werten auf Werte verändert, die unterhalb der vorgegebenen Schwelle S liegen.

Der Gleichrichteranordnung 1 ist eine Abtasteinrichtung 2 nachgeordnet, die mit einem Taktgenerator 3 verbunden ist. Die gleichgerichtete Meßgröße M wird demzufolge mit einer Abtastrate abgetastet, die durch die Frequenz des Taktgenerators 3 vorgegeben ist. An den Ausgang der Abtasteinrichtung 2 liegt ein Analog-Digital-Umsetzer 4, an dessen Ausgang 5 sowohl ein Funktionsgenerator 6 als auch ein Pufferspeicher 7 angeschlossen ist.

Im Funktionsgenerator 6 werden die in digitaler Form vorliegenden abgetasteten Meßwerte entsprechend einer vorgegebenen Funktion gewichtet, die sich durch die Gleichung $f = J^2 \cdot t$ beschreiben läßt, in der t die Zeit bezeichnet. Dem Funktionsgenerator 6 ist ein Addierer 8 nachgeordnet, in dem die gewichteten Werte aufsummiert werden. Mittels einer nachgeordneten Grenzwertstufe 9 wird überprüft, ob der Stand des Addierers 8 einen vorgegebenen Grenzwert erreicht hat; ist dies der Fall, dann spricht die Grenzwertstufe 9 und erzeugt ein Auslösesignal Z. Die Grenzwertstufe 9 ist so eingestellt, daß auf Überlastung zu überwachende elektrische Geräte, wie beispielsweise Motoren, nicht beschädigt werden.

Die abgetasteten Meßwerte in digitaler Form gelangen auch in den Pufferspeicher 7, wobei durch den Taktgenerator 3 dafür gesorgt ist, daß jeder abgetastete Meßwert, der in digitaler Form am Ausgang des Analog-Digital-Umsetzers 4 auftritt, als jeweils aktuellster Wert im Pufferspeicher 7 gespeichert wird. An dem Pufferspeicher 7 ist eine Vergleicheranordnung 10 geschlossen, die alle jeweils im Pufferspeicher 7 gespeicherten abgetasteten Werte miteinander vergleicht. Bei diesen jeweils gleichzeitig abgespeicherten Meßwerten handelt es sich also um diejenigen letzten abgetasteten Werte, deren Anzahl der Zahl der Speicherplätze im Pufferspeicher 7 entspricht. Der Vergleich der jeweils gleichzeitig abgespeicherten Meßwerte erfolgt - gesteuert durch den Taktgenerator 3 - mit einer Rate, die der Abtastrate entspricht.

Dies bedeutet, daß mit jedem neu gespeicherten digitalen Wert ein Vergleich aller jeweils gleichzeitig im Pufferspeicher 7 gespeicherten digitalen Werte untereinander vorgenommen wird. Der Vergleichsanordnung 10 ist ein Grenzwertbaustein 11 nachgeordnet. Ausgangsseitig ist der Grenzwertbaustein 11 mit einem Reset-Eingang des Addierers 7 verbunden. Auf diese Weise ist erreicht, daß bei durch den Vergleich in der Vergleichsanordnung 10 ermittelten jeweils höchsten abgespeicherten Werten mit unterhalb der vorgegebenen Schwelle S liegenden Werten der Grenzwertbaustein 11 anspricht und ein Reset-Signal an den Addierer 8 abgibt, worauf dieser auf Null zurückgestellt wird. Sofern nicht bereits ein Auslösesignal Z erzeugt ist, wird dieses Signal nicht mehr hervorgerufen.

Der Ablauf des erfindungsgemäßen Verfahrens soll im nachfolgenden anhand der Figuren 1 und 2 im einzelnen dargelegt werden:

Überschreitet der zu überwachende Strom J bzw. die aus ihm abgeleitete Meßgröße M die vorgegebene Schwelle S, dann wird eine figürlich nicht dargestellte Anregungsschaltung zum Ansprechen gebracht; dies geschieht bei einem Stromverlauf, wie er in Figur 1 dargestellt ist, zum Zeitpunkt t1. Der durch den Abtastimpuls A2 abgetastete Meßwert wird daraufhin als erster Meßwert in den Pufferspeicher 7 eingespeichert und gleichzeitig nach Wichtung im Funktionsgenerator 6 im Addierer 8 festgehalten. Entsprechendes geschieht aufgrund der nachfolgenden Abtastimpulse. So wird mit dem Abtastimpuls A3 der Scheitelwert der ersten Halbwelle der Meßgröße M gespeichert. Danach werden auf weitere Abtastimpulse A hin weitere Abtastwerte nacheinander im Pufferspeicher 7 abgelegt. Nimmt man als Beispiel an, daß der Pufferspeicher 7 sechs Speicherplätze aufweist, dann wird auf den Abtastimpuls A9 hin der mit den Abtastimpuls A3 gespeicherte Wert in dem Pufferspeicher 7 gelöscht und als höchster Meßwert im Puffer speicher 7 der Scheitelwert der zweiten Halbwelle gespeichert. Sowohl während der Zeit, als der größte Scheitelwert gespeichert war, als auch während der Zeit, in der der zweithöchste Scheitelwert gespeichert ist, stellt die Vergleichsanordnung 10 als jeweils höchsten gespeicherten Wert den entsprechenden Scheitelwert fest und der nachgeordnete Grenzwertbaustein 11 spricht nicht an, da die ihm angebotenen Stromwerte oberhalb der vorgegebenen Schwelle S liegen.

Dies gilt bis zum Zeitpunkt t2, weil der zu diesem Zeitpunkt abgetastete Wert unterhalb der vorgegebenen Schwelle S liegt und der bis dahin gespeicherte, gerade noch oberhalb der vorgegebenen Schwelle S liegende Wert im Pufferspeicher 7 gelöscht ist. Es wird demzufolge zum Zeitpunkt t2 von dem Grenzwertbaustein 11 ein Reset-Signal erzeugt und dadurch der Addierer 8 gelöscht bzw. die Aufsummierung rückgängig gemacht. Eine weitere Aufsummierung im Addierer 8 kann nicht stattfinden.

Weist dagegen die Meßgröße M in Abweichung von dem dargestellten Verlauf über den Zeitpunkt t2 hinaus Werte oberhalb der Schwelle S auf, dann erreicht der Addierer 8 einen Stand bei dem das Auslösesignal Z abgegeben wird.

Mit dem Blockschaltbid nach Figur 3 wird eine weitere Art des erfindungsgemäßen Verfahrens erläutert. Das dazu dienende und in der genannten Figur dargestellte Blockschaltbild unterscheidet sich von dem nach Figur 2 nur dadurch, daß die Abtasteinrichtung 2 wie der Pufferspeicher 7 nunmehr mit einer Frequenz fl des Taktgenerators 3 gesteuert werden. Die Rate, mit der von der Vergleichsanordnung 10 ein Vergleich aller jeweils gleichzeitig gespeicherten digitalen Werte untereinander vorgenommen wird, ist durch die Frequenz f2 des Taktgenerators gegeben. Diese Frequenz f2 ist niedriger als die Frequenz f1. Wird mit n die Anzahl der Speicherplätze im Pufferspeicher 7 bezeichnet und mit fN die Frequenz des zu überwachenden Stromes J, dann ergeben sich bei einer Gleichrichteranordnung nach Art einer Zweiweggleichrichtung folgende Beziehungen:

$$n \geqslant \frac{1}{2} \cdot \frac{f_1}{f_N} \qquad (1)$$

$$n \geqslant \frac{f_1}{f_2} \qquad (2)$$

Bei dieser Ausführungsart des erfindungsgemäßen Verfahrens sind die Anforderungen bei der praktischen Durchführung an den Pufferspeicher und an die Vergleichsanordnung verhältnismäßig gering, so daß bei der bevorzugten Ausführung des erfindungsgemäßen Verfahrens mit einem Mikrocomputer an diesen geringere Leistungsanforderungen zu stellen sind. Diesem Vorteil steht ein hinsichtlich der Meßgenauigkeit sich ergebender geringfügiger Nachteil gegenüber, weil aufgrund der Rate, mit der der Vergleich der jeweils gespeicherten Meßwerte durchgeführt wird, nicht sichergestellt werden kann, daß - gemessen an den Verhältnissen nach Figur 1 - das Reset-Signal tatsächlich zum Zeitpunkt t2 auftritt. Eine mögliche Verschiebung um einige Abtastimpulse kann auftreten.

Im übrigen läuft das erfindungsgemäße Verfahren nach Figur 3 genauso ab, wie es im Zusammenhang mit der Erläuterung der Figuren 1 und 2 ausführlich geschildert worden ist.

## Patentansprüche

1. Verfahren zum Erzeugen eines Auslösesignals (Z) in Abhängigkeit von der Größe und der Dauer eines Überstromes (J), bei dem

a) eine aus dem Überstrom (J) abgeleitete, gleichgerichtete Meßgröße (M) abgetastet wird und die abgetasteten Meßwerte in entsprechende digitale Werte umgeformt werden,

b) die digitalen Werte einer vorgegebenen Funktion entsprechend gewichtet und aufsummiert werden und bei einem oberhalb eines vorliegenden Vergleichswertes liegenden Summenwert das Auslösesignal (Z) gebildet wird und

c) die Aufsummierung vor Bildung des Auslösesignals (Z) rückgängig gemacht wird, wenn der Überstrom (J) für eine Zeit eine vorgegebene Schwelle (S) unterschreitet, **dadurch gekennzeichnet, daß**

d) die digitalen Werte des jeweils letzten, mindestens einer Halbperiode des Überstromes (J) entsprechenden Zeitraums gespeichert werden, daß

e) ein Vergleich aller jeweils gleichzeitig gespeicherten digitalen Werte untereinander vorgenommen wird und daß

f) auf einen bei dem Vergleich ermittelten höchsten gespeicherten Wert mit einer unterhalb der vorgegebenen Schwelle (S) liegenden Größe die Aufsummierung rückgängig gemacht wird.

2. Verfahren nach Anspruch 1, **dadurch gekennzeichnet, daß**

g) mit jedem neu gespeicherten digitalen Wert ein Vergleich aller jeweils gleichzeitig gespeicherten digitalen Werte untereinander vorgenommen wird.

3. Verfahren nach Anspruch 1, **dadurch gekennzeichnet, daß**

h) ein Vergleich aller jeweils gleichzeitig gespeicherten digitalen Werte untereinander mit einer Rate (f2) erfolgt, die kleiner als die Abtastrate (f1) ist, mit der die gleichgerichtete Meßgröße (M) abgetastet wird.

## Claims

1. Method for generating a tripping signal (Z) as a function of the magnitude and the duration of an overcurrent (J), in which

a) a rectified measured quantity (M), which is derived from the overcurrent (J), is scanned and the scanned measured values are converted into corresponding digital values;

b) the digital values for a given function are weighted accordingly and added up and, if a total value lies above a present comparison value, the tripping signal (Z) is established and

c) the adding-up is reset before the tripping signal (Z) is established if the overcurrent (J) falls below a given threshold (S) for a time, characterised in that

d) the digital values are stored for the last respective time period which corresponds to at least one half-period of the overcurrent (J), in that

e) a comparison is made of all the digital values, stored simultaneously in each case, one with the other and in that

f) the adding-up is reset in the event of a highest stored value, determined in the comparison, having a magnitude lying below the given threshold (S).

2. Method according to claim 1, characterised in that

g) with each newly stored digital value a comparison is made of all the digital values, stored simultaneously in each case, one with the other.

3. Method according to claim 1, characterised in that

h) a comparison of all the digital values, stored simultaneously in each case, one with the other takes place at a rate (f₂) which is smaller than the scanning rate (f₁) at which the rectified measured quantity (M) is scanned.

**Revendications**

1. Procédé pour générer un signal de déclenchement (Z) en fonction de la grandeur et de la durée d'une surintensité de courant (J), selon lequel

a) une grandeur de mesure (M) dérivée de la surintensité (J) et redressée est échantillonnée et les valeurs de mesure échantillonnées sont converties en valeurs numériques correspondantes,

b) les valeurs numériques sont pondérées selon une fonction préfixée et totalisées, le signal de déclenchement (Z) étant formé si la valeur cumulée est supérieure à une valeur de comparaison donnée et

c) la totalisation étant annulée, avant la formation du signal de déclenchement (Z), si la surintensité (J) chute pour un certain temps en-dessous d'un seuil (S) préfixé, caractérisé en ce que

d) les valeurs numériques du dernier laps de temps, correspondant au moins à une demi-période de la surintensité de courant (J), sont mémorisées,

e) une comparaison est effectuée entre toutes les valeurs numériques mémorisées simultanément et

f) la totalisation est annulée lorsqu'une valeur mémorisée maximale, déterminée lors de la comparaison, présente une grandeur inférieure au seuil (S) préfixé.

2. Procédé selon la revendication 1, caractérisé en ce que

g) à chaque valeur numérique nouvellement mémorisée, une comparaison est effectuée entre toutes les valeurs numériques mémorisées simultanément.

3. Procédé selon la revendication 1, caractérisé en ce que

h) une comparaison entre toutes les valeurs numériques mémorisées simultanément s'effectue à une cadence (f₂) qui est plus petite que la cadence d'échantillonnage (f₁) avec laquelle la grandeur de mesure (M) redressée est échantillonnée.

FIG 1

FIG 2

FIG 3